**Europäisches Patentamt**

(19) **European Patent Office**

**Office européen des brevets**

(11) Numéro de publication: **0 026 689**

**B1**

(12) **FASCICULE DE BREVET EUROPEEN**

(45) Date de publication du fascicule du brevet: **06.07.83**

(51) Int. Cl.³: **B 64 C 25/14**

(21) Numéro de dépôt: **80401281.3**

(22) Date de dépôt: **08.09.80**

(54) Train de roulement relevable pour véhicule.

(30) Priorité: **13.09.79 FR 7922926**
**27.06.80 FR 8014312**

(43) Date de publication de la demande:
**08.04.81 Bulletin 81/14**

(45) Mention de la délivrance du brevet:
**06.07.83 Bulletin 83/27**

(84) Etats contractants désignés:
**DE GB IT**

(56) Documents cités:
**GB - A - 613 430**
**US - A - 2 471 603**
**US - A - 2 487 598**
**US - A - 3 580 531**

(73) Titulaire: **MESSIER-HISPANO-BUGATTI (S.A)**
**5, rue Louis Lejeune**
**F-92120 Montrouge (FR)**

(72) Inventeur: **Masclet, Jean**
**11, Boulevard Davout**
**F-75020 Paris (FR)**
Inventeur: **Turiot, André**
**77, Ave de l'Escadrille Normandie Niemen**
**F-91390 Morsang S/Orge (FR)**

(74) Mandataire: **Flavenot, Bernard**
**Société S.E.D.I.C. 40 rue Victor Basch**
**F-92120 Montrouge (FR)**

Courier Press, Leamington Spa, England.

# Train de roulement relevable pour véhicule

L'invention a pour objet un train de roulement relevable pour véhicule, notamment pour aérodyne, comme par exemple des hélicoptères.

On connait déjà des trains d'atterrissage qui comportent une jambe montée rotative sur un premier axe, une contre-fiche comportant deux bielles dont une extrémité est montée rotative sur la jambe, et dont l'autre extrémité est montée rotative sur un point fixe de la structure d'un aéronef, la commande du relevage ou de la descente d'un tel train étant commandé par un vérin reliant la jambe à la contre-fiche.

Un tel type de train est notamment illustré dans le brevet américain US—A. 3.580.531.

On connait aussi un train d'atterrissage relevable pour aérodyne (ou aéronef) dont chaque atterrisseur comprend une jambe, dont le caisson est articulé, autour d'un axe de relevage fixe sur la structure de l'aérodyne, et une contre-fiche briseuse, constituée d'une bielle, articulée autour d'un axe fixe sur la structure, et d'un levier, articulé sur le caisson, la bielle et le levier étant, de plus, articulés l'un sur l'autre, et verrouillés en position alignée, dans le prolongement l'un de l'autre, sous l'effet de moyens élastiques de traction fixés d'un côté sur la bielle et de l'autre côté sur le levier, lorsque l'atterrisseur est amené en position "train sorti" par la rétraction d'un vérin de manoeuvre articulé sur la contre-fiche briseuse. De plus, à partir de la position "train sorti", l'extension du vérin commande, tout d'abord le déverrouillage de la contre-fiche par désalignement de la bielle et du levier puis, simultanément, la fermeture de la contre-fiche et la rotation du caisson autour de l'axe de relevage, à l'encontre des moyens élastiques, jusqu'à une position intermédiaire dans laquelle l'articulation du levier sur le caisson est alignée avec l'axe de relevage et l'axe d'articulation de la bielle sur la structure, entre ces derniers, la rotation du caisson et l'ouverture de la contre-fiche au-delà de cette position, commandées par le vérin, s'effectuant avec l'assistance des moyens élastiques qui commandent le verrouillage de l'atterrisseur en position "train rentré", en assurant le verrouillage de la contre-fiche par réalignement de la bielle et du levier avec l'assistance du vérin, tandis que la rétraction du vérin à partir de la position "train rentré" commande, symétriquement, le déverrouillage de la contre-fiche par désalignement de la bielle et du levier, puis, simultanément, la fermeture de la contre-fiche et la rotation du caisson autour de l'axe de relevage, à l'encontre des moyens élastiques jusqu'à la position intermédiaire, la rotation du caisson et l'ouverture de la contre-fiche au-delà de cette position, commandées par le vérin, s'effectuant avec l'assistance des moyens élastiques, qui commandent le verrouillage de l'atterrisseur en position "train sorti" en assurant le verrouillage de la contre-fiche par réalignement de la bielle et du levier avec l'assistance du vérin.

Dans le train connu décrit ci-dessus, le vérin est relié, d'une part, à la contre-fiche et, d'autre part, à un troisième point fixe situé sur l'aéronef.

Etant donné la structure particulière de la contre-fiche et de la jambe de la roue qui sont fixés en deux points sur l'aéronef, elle définit un plan qui passe par deux points.

Du fait des contraintes auxquelles est soumis l'aéronef, il se peut que ce plan subisse des rotations parasites autour de la droite passant par ces deux points.

Comme le vérin est, de par sa construction, une structure rigide dans la longueur, et comme il est lié à la contre-fiche et à l'aéronef, il peut subir en conséquence des torsions parasites qui peuvent bloquer le train lors des opérations de sa sortie ou de sa rentrée, et, de toute façon, endommager le vérin plus rapidement qu'il devrait l'être.

La présente invention a pour but de pallier les inconvénients mentionnés ci-dessus, et de réaliser un train d'atterrissage plus compact et plus fiable.

La présente invention a pour objet un train de roulement pour véhicule, notamment pour aéronef, comportant:

— une jambe supportant au moins une roue, ladite jambe comportant un premier axe de rotation apte à être fixé sur ledit véhicule en un premier point,

— une contre-fiche comprenant une bielle et un levier monté pivotant l'un sur l'autre autour d'un troisième axe, ladite bielle comportant un second axe de rotation, apte à être fixé sur ledit véhicule en un second point et ledit levier étant monté pivotant autour d'un quatrième axe sur ladite jambe.

— un vérin de commande pour appliquer au moins un couple de rotation à ladite contre-fiche et à ladite jambe,

— des premiers moyens de liaison d'une extrémité dudit vérin à la jambe en un troisième point et des seconds moyens de liaison de l'autre extrémité dudit vérin à ladite contre-fiche en un quatrième point, lesdits troisième et quatrième points étant situés sensiblement au voisinage respectivement desdits premier et second points,

— des moyens de positionnement desdits bielle et levier l'un par rapport à l'autre, caractérisé par le fait que lesdits moyens de positionnement sont constitués par un bras d'une longueur donnée, formé de deux biellettes rotatives à une de leurs extrémités à un sixième axe, ledit bras étant lié sensiblement à ses deux extrémités en un quatrième point sur ladite bielle et en un sixième point sur ledit levier, lesdits quatrième et sixième points et ledit troisième axe étant situés aux sommets d'un triangle déformable, le vérin étant agencé de façon à appliquer un couple de rotation à ladite contre-fiche par l'intermédiaire de l'une des deux biellettes à laquelle il applique aussi un couple de rotation.

La présente invention sera mieux comprise à l'aide d'un exemple particulier de réalisation qui sera décrit ci-après, à titre illustratif mais nullement limitatif, en référence, aux figures annexées dans lesquelles:

— les figures 1 et 2 représentent une vue de côté, respectivement en position "train sorti" et "train rentré", un mode de réalisation d'un train, et,

— la figure 3 représente une partie du train d'atterrissage objet d'un mode de réalisation perfectionné selon l'invention.

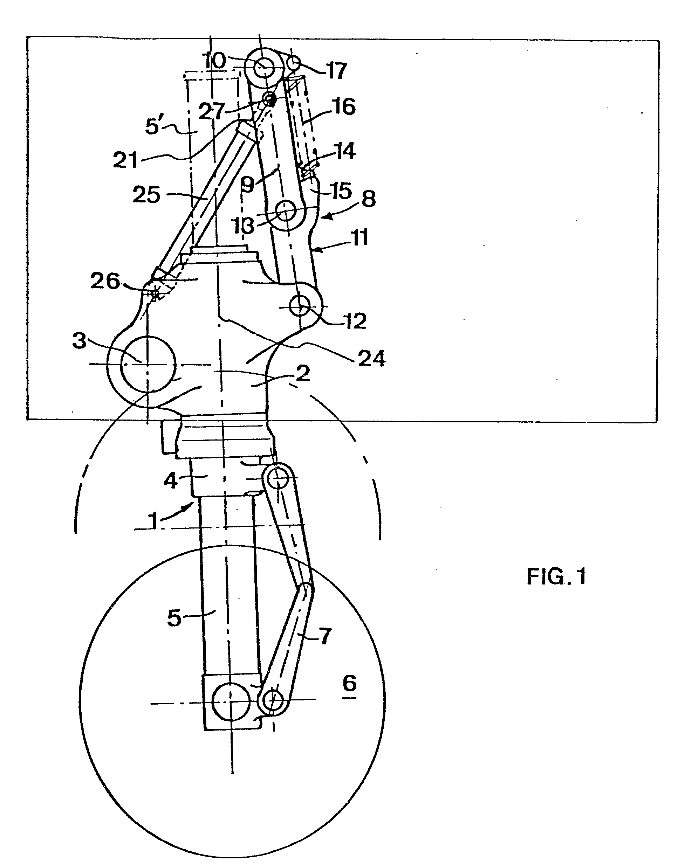

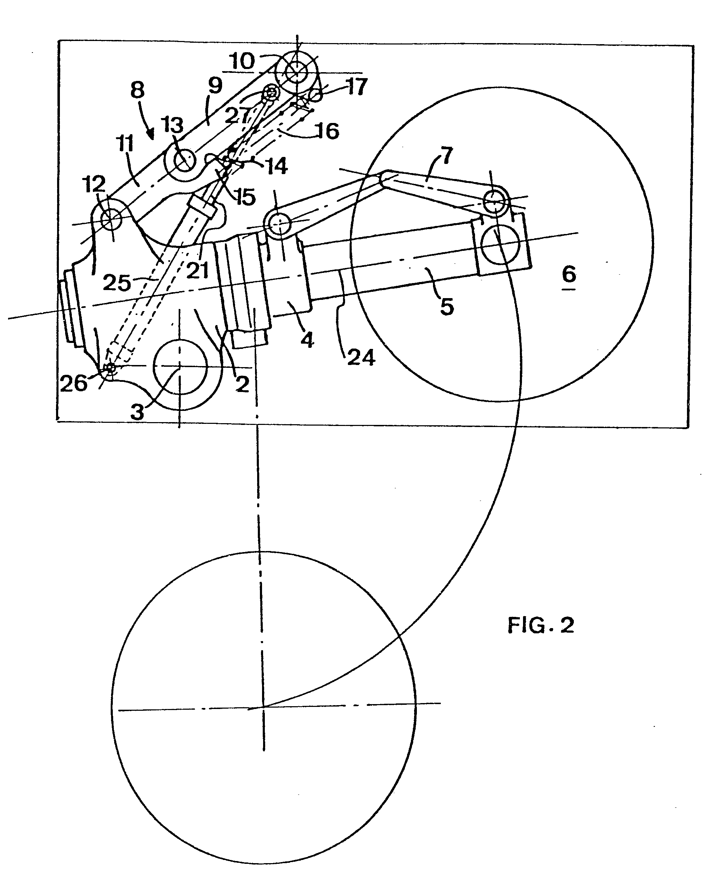

En référence aux figures 1 et 2, l'atterrisseur comprend une jambe 1 constituée d'un caisson 2, articulé autour d'un axe de relevage 3 fixé sur la structure de l'aérodyne, et dans lequel un cylindre d'amortisseur 4 peut être éventuellement monté tourillonnant, c'est ainsi que le cylindre 4 est traversé par une tige d'amortisseur 5 portant, à son extrémité inférieure, une roue 6, et constituant avec le cylindre 4 un amortisseur à coulissement tel que la tige 5 pouvant dépasser en 5' de l'autre côté du cylindre 4 par rapport à la roue 6, en position comprimée de l'amortisseur.

Toute rotation du cylindre 4 vis-à-vis du caisson 2 est transmise à la roue 6 par un compas 7. Le contreventement de la jambe 1 en position "train sorti" est assuré par une contre-fiche 8 constituée d'une bielle 9, articulée autour d'un axe fixe 10 sur la structure de l'aérodyne et d'un levier 11, articulé sur le caisson 2 autour d'un axe 12, et sur la bielle 9 autour d'un axe 13. Des faces d'appui prévues, l'une sur la bielle 9 et l'autre sur le levier 11, constituent des butées 14 et 15 venant en appui l'une contre l'autre lorsque la bielle 9 et le levier 11 sont verrouillés en position alignée l'un avec l'autre ou, plus précisément, en position légèrement au-delà de la position d'alignement de l'un avec l'autre, sous l'effet d'un ressort de traction 16 attaché à une extrémité sur la butée 15 du levier 11 et à l'autre extrémité sur un attache 17 de la bielle 9. Un vérin 25 est articulé par son cylindre autour d'un axe 26 sur le caisson 2, et par sa tige, sur la bielle 9 autour d'un axe 27. L'axe 27 sur la bielle 9 étant disposé du même côté que celui où se trouve la contre-fiche 8 par rapport à l'axe géométrique défini par les axes fixes 3 et 10 en position "train sorti" comme en position "train rentré".

De plus, les axes 26 et 27 sont situés le plus près possible des deux axes fixes 10 et 3, sur l'aérodyne, de façon que le vérin soit de préférence à proximité de la droite passant par les deux axes fixes 3 et 10 de façon que si, en toute éventualité, le point 12 subissait des rotations parasites en force autour de cet axe, le vérin n'étant que très partiellement concerné par celles-ci. Bien entendu, les deux axes 26 et 27 sont situés dans le train pour qu'il puisse fonctionner de la façon dont il sera explicité ci-après.

L'atterrisseur se relevant longitudinalement vers la droite sur la figure 1, les axes 3, 10, 12 et 13 sont donc perpendiculaires au plan de cette figure, l'axe 3 étant disposé vers l'avant par rapport à l'axe longitudinal 24 du caisson 2 tandis que les axes 10, 12 et 13 sont disposés vers l'arrière de cet axe longitudinal 24.

Quant à l'axe de rotation 26, il est toujours situé du même côté de la droite passant par les deux axes 3 et 10, par exemple du côté opposé à l'axe 12 quand le train est en position sortie (figure 1) par rapport à cette droite et dans le secteur angulaire défini par les deux droites passant respectivement par les axes 3 et 12, d'une part, et 27 et 12, d'autre part, quand le train est en position rentrée (figure 2).

Dans ce mode de réalisation l'axe de fixation en rotation 27 du vérin est directement situé sur la contre-fiche 8 et plus particulièrement sur la bielle 9, mais il est bien évident que celui-ci peut être par exemple reliée à cette contre-fiche 8 par tous moyens qui puissent lui transmettre la force qui est exercée à l'extrémité du vérin lié à cet axe 27. Plus précisément, le train fonctionne de la façon suivante, quand il passe d'une des deux positions rentrée et sortie à l'autre.

Ainsi, lorsque l'on commande l'extension du vérin, c'est-à-dire la sortie de la tige 21, à partir de la position "train sorti", dans laquelle la tige 21 est rentrée, on exerce sur la bielle 9 un moment de rotation autour de l'axe 10 dans le sens du désalignement de la bielle 9 et du premier levier 11, c'est-à-dire dans le cas de la figure dans le sens sénestrorsum à l'encontre du ressort 16.

Le vérin 25 commande ainsi le déverrouillage de la contre-fiche 8, puis le relevage de l'atterrisseur autour de l'axe de relevage 3, le point 12 se soulevant par l'effet de couple autour de l'axe 3 et la force exercée en 26.

Le relevage s'effectue à l'encontre des ressorts 16 jusqu'à une position intermédiaire, dans laquelle l'axe 13 est aligné avec les axes fixes 3 et 10 et entre ces derniers.

Au-delà de cette position, le relevage s'effectue avec l'assistance des ressorts 16 et la force du vérin, la contre-fiche ayant cessé de se fermer à la position intermédiaire, et s'ouvrant au-delà de celle-ci, pour être à nouveau dépliée et verrouillée en position alignée, ou légèrement au-delà de la position alignée, sous l'effet des ressorts 16. Avec l'assistance du vérin 25, lorsque l'atterrisseur est arrivé en position "train rentré", comme cela est représenté sur la figure 2.

On constate que, dans cette position, l'axe du vérin coupe l'axe géométrique défini par les axes 3 et 12, et que la contre-fiche 8 est passée de l'autre côté de l'axe géométrique défini par les axes 3 et 10, par rapport à la position occupée en position "train sorti". L'atterrisseur occupe donc des positions stables lorsqu'il est verrouillé relevé ou sorti.

A partir de la position "train rentré", si l'on commande la rétraction du vérin 25, c'est-à-dire la rentrée de la tige 21 dans le cylindre de vérin, on exerce des efforts contraires sur la bielle 9 qui tourne dans le sens senestrorsum autour de l'axe 10 pour obtenir le désalignement de la bielle 9 et du levier 11, c'est-à-dire dans le sens de la cassure de la contre-fiche 8 à l'encontre du ressort 16. Le vérin 25 commande ainsi le déverrouillage de la contre-fiche 8 puis la descente de l'atterrisseur autour de l'axe 3 par effet de couple sur cet axe. Cette descente s'effectue jusqu'à la position intermédiaire de la contre-fiche qui continue à se casser puis ensuite se réaligne comme montré sur la figure 1. Enfin, on constate que les positions rentrée et sortie du train sont parfaitement définies et surtout confirmées et maintenues par l'effet du ressort 16 et de la coopération des surfaces de butée 14 et 15 quand elles sont en appui l'une sur l'autre.

Cette butée donne de bons résultats dans la majorité des cas mais, par contre, dans des conditions très sévères d'utilisation, elle peut présenter un inconvénient.

En effet, dans les pays très froids, de la glace peut se former entre la bielle et l'extension du levier, et empêcher, de ce fait, l'obtention de la position voulue avec les risques d'un possible déverrouillage du train de l'une de ses deux positions.

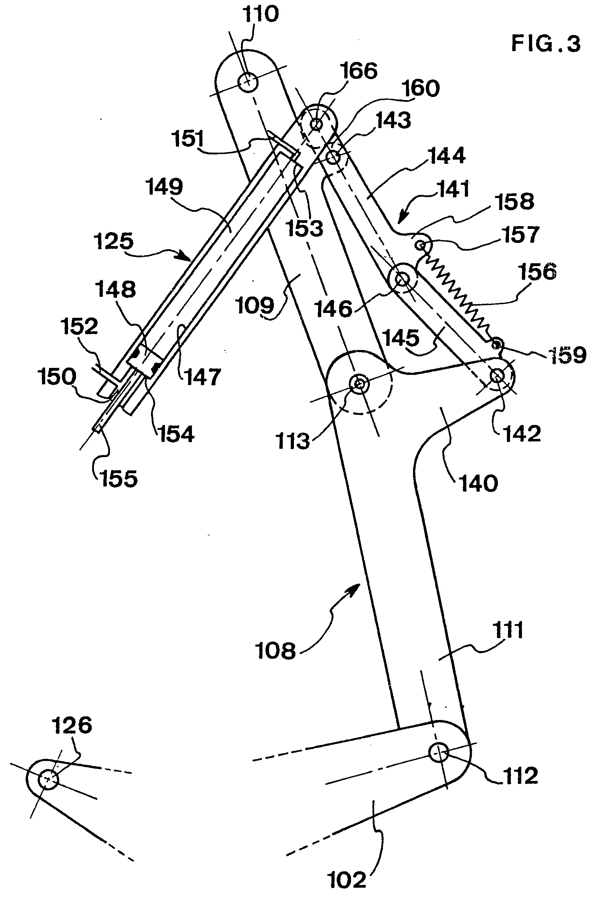

Le mode de réalisation illustré sur la figure 3 a pour but de perfectionner le train selon les figures 1 et 2, et notamment de réaliser un train d'atterrissage relevable sans aucune butée extérieure de positionnement.

La figure 3 représente essentiellement la contre-fiche principale du train d'atterrissage avec son moyen de blocage dans une position pouvant être celle du train sorti.

La partie du train comprend donc une contre-fiche 108 formée d'une bielle 109 fixée à une de ses extrémités sur un axe rotatif 110 solidaire du châssis de l'avion et à son autre extrémité rotative autour d'un axe 113 sur une extrémité d'un levier 111 dont l'autre extrémité est montée rotative autour d'un axe 112 sur une jambe 102.

Le levier 111 comporte sensiblement au niveau de l'axe 113 un bossage excentré 140 qui porte un bras 141 dont une extrémité est montée rotative autour d'un axe 142 sur ce bossage, et dont l'autre extrémité est montée rotative sur la bielle 109 autour d'un axe 143. La longueur du bras 141 est déterminée à une certaine valeur, et les trois axes 142 143 et 113 sont situés sensiblement au sommet d'un triangle qui peut être déformable. Le bras 141 est formé de deux diellettes 144 et 145 liées sensiblement par leur milieu, autour d'un axe rotatif 146 pour pouvoir pivoter l'une par rapport à l'autre, leurs autres extrémités de ces deux éléments étant reliées respectivement aux axes 143 et 142.

Dans ce mode de réalisation, la biellette 144 s'étend légèrement par une extension 160 au-delà de l'axe 143 et porte un axe 166 autour duquel peut pivoter l'extrémité d'un vérin de commande 125 qui permettra d'obtenir par ses deux positions, de rentrer ou sortir le train.

Ce vérin est constitué très schématiquement par un cylindre 147 dans lequel peut se déplacer un piston 148 délimitant deux chambres à volume variable 149 et 150 avec leur alimentation en fluide sous pression respectivement par les conduites 151 et 152. Il est à remarquer que ce vérin est conformé pour que sa longueur ait une valeur déterminée de façon que les deux extrémités 153 et 154 constituent des butées pour le piston 148, et en limite ainsi son déplacement.

Bien entendu, la tige de sortie 155 du vérin 125 peut être reliée suivant les cas directement ou indirectement à la jambe 102 ébauchée sur la figure.

Enfin, les deux biellettes 144 et 145 sont soumises à l'action d'un ressort 156 qui prend appui en 157 sur une excentration 158 de la bielle 144 et sur la biellette 145 en un point 159, de façon que les deux points 157, 159, et l'axe 146, soient situés sur un triangle (déformable).

Le perfectionnement selon l'invention fonctionne de la façon suivante.

On supposera que la figure représente la partie du train quand il est en position sortie. Pour le rentrer on agit sur le vérin, pour tendre à obtenir sa position rentrée, c'est-à-dire lorsque le piston se dirige vers le fond 153.

Ce cas, le vérin exerce une traction sur l'axe 166 et détruit le quasi alignement 143, 146 et 142 en obtenant dans ce cas de figure une rotation sénestrorsum pour la biellette 144 autour de l'axe et dextrorsum pour l'autre biellette 145 autour de l'axe 142. Ces mouvements transmettent une force de traction sur l'axe 142 vers l'axe 110. Ceci a pour conséquence de détruire aussi le quasi alignement des axes 110, 113 et 112 en obtenant une rotation sénestrorsum pour la bielle 109 et autour de l'axe 110, dextrorsum pour le levier 111 autour de l'axe 112. Ces deux dernières rotations ont alors pour conséquence d'appliquer une force de traction sur l'axe 112 vers l'axe 110. Puisque cet axe 110 est fixé sur l'avion, cette traction va faire tourner la jambe 102 autour de son axe fixe 126 situé sur l'avion.

On pourra comprendre aisément que lorsque le piston 154 arrive à l'extrémité 153, le train sera complètement rentré et la contre-fiche 108 prendra la même configuration que celle représentée sur la figure, mais dans une position symétrique par rapport à la droite passant par l'axe 110 et l'autre point fixe 126.

Il est à remarquer que, en fait, sur la figure on a représenté avec une exagération, d'une part, les axes 110, 113 et 112, et, d'autre part, les axes 143, 146 et 142, pas tout à fait alignés.

Cette configuration permet des positions respectivement pour la contre-fiche 108 et le bras 141 plus stables, le ressort 156 agissant notamment sur les deux biellettes 144 et 145 pour confirmer et maintenir le léger désalignement du bras formé des deux biellettes 144 et 145.

Enfin, on suppose maintenant que le train est amené dans sa position sortie pour arriver à prendre la configuration représentée sur la figure.

Dans cette hypothèse, le piston 148 du vérin 125 se dirige vers le fond 154 de la chambre 150. Quand le piston arrive à cette position en butée, le bras (141) prend la configuration représentée et, de plus, le piston étant en butée dans le vérin, le bras ne peut pas se déformer plus. Cette butée empêche donc que lors de la commande de la rentrée du train on obtienne une cassure autre que celle définie précédemment c'est-à-dire des rotations sénestrorsum et dextrorsum respectivement pour les biellettes 144 et 145. Enfin, on comprend le rôle des deux biellettes 144 et 145 quand elles sont quasiment alignées, la distance séparant les axes 143 et 142 est maximum, comme, de plus, les distances séparant les axes 142 et 113 d'une part, et 143 et 113 d'autre part, sont fixes et constantes, quand le levier 111 a effectué sa rotation dextrorsum par rapport à l'axe 113, il sera arrivé à sa position finale quand la distance 143, 142 sera maximale (ou presque) empêchant tout autre rotation supplémentaire. On conçoit bien ainsi que le bras 141 (formé de deux biellettes) constitue un moyen de positionnement du levier par rapport à la bielle, en donnant les mêmes résultats qu'une butée, mais sans ses inconvénients.

Bien entendu, le mode de réalisation qui a été décrit ici n'est qu'un mode possible et notamment en adaptant la contre-fiche 108 et le bras 141, il est possible de relier le vérin 125, sur la biellette 141 entre les axes 143 et 146, ou sur la biellette 145 entre les axes 146 et 142 ou soit au-delà de l'axe 142 par rapport à l'axe 146.

Cependant, dans un mode avantageux, du fait que le vérin doit agir simultanément sur le bras (ou les biellettes) et la contre-fiche pour obtenir deux rotations simultanées en sens inverse, il est préférable que le point d'attache rotatif 166 du vérin sur une biellette ne soit pas très éloigné du point d'attache 143 du bras sur la contre-fiche (bielle 109). Ceci permet d'ailleurs de n'utiliser qu'un seul vérin pour obtenir toutes les opérations de rentrée et sortie du train, ainsi que de verrouillage notamment par les légers désalignements mentionnés ci-avant.

Et, de plus, ce vérin a un mouvement très continu uniforme pour faire passer le train d'une position à l'autre.

## Revendications

1. Train de roulement pour véhicule, notamment pour aéronef, comportant:
— une jambe (102), supportant au moins une roue, ladite jambe (102) comportant un premier axe (126) de rotation apte à être fixé sur ledit véhicule en un premier point,
— une contre-fiche (108) comprenant une bielle (109) et un levier (111) monté pivotant l'un sur l'autre autour d'un troisième axe (113), ladite bielle (109) comportant un second axe de rotation (110), apte à être fixé sur ledit véhicule en un second point et ledit levier (111) étant monté pivotant autour d'un quatrième axe (112) sur ladite jambe (102).
— un vérin de commande (125) pour appliquer au moins un couple de rotation à ladite contre-fiche (108) et à ladite jambe (102),
— des premiers moyens de liaison d'une extrémité dudit vérin (125) à la jambe (102) en un troisième point et des seconds moyens de liaison (166,160) de l'autre extrémité dudit vérin à ladite contre-fiche en un quatrième point (143) lesdits troisième (112) et quatrième (143) points étant situés sensiblement au voisinage respectivement desdits premier et second points,
— des moyens de positionnement desdits bielle et levier l'un par rapport à l'autre (140,141,156),
caractérisé par le fait que lesdits moyens de positionnement sont constitués par un bras (141) d'une longueur donnée, formé de deux biellettes (144,145) rotatives à une de leurs extrémités à un même sixième axe (146), ledit bras (141) étant lié sensiblement à ses deux extrémités au quatrième point (143) sur ladite bielle (109) et en un sixième point (142) sur ledit levier (111), lesdits quatrième et sixième points (143,142) et ledit troisième axe (113) étant situés aux sommets d'un triangle déformable, le vérin (125) étant agencé de façon à appliquer un couple de rotation à ladite contre-fiche (108) par l'intermédiaire d'une des deux biellettes (144,145) à laquelle il applique aussi un couple de rotation.

2. Train selon la revendication 1, caractérisé par le fait qu'il comporte un ressort (156) ayant ses extrémités ancrées en deux attaches (157,159) respectivement sur les deux biellettes (144, 145), les deux attaches (157,159) et ledit sixième axe (146) étant situés aux sommets d'un triangle déformable.

3. Train selon l'une des revendications 1 ou 2, caractérisé par le fait que ledit bras (141) comporte des moyens (160,166) pour supporter l'extrémité du vérin (125).

4. Train selon la revendication 3, carac- térisée par le fait que ledit vérin comporte des butées (153, 154) internes pour limiter la longueur de sa course.

## Claims

1. Running gear for a vehicle, in particular an aircraft, the gear comprising:

a leg (102) supporting at least on wheel, said leg (102) including a first axis (126) of rotation suitable for being fixed to said vehicle at a first point,

a brace (108) including a rod (109) and a lever (111) articulated to each other about a third axis (113), said rod (109) having a second axis of rotation (110) suitable for being fixed to said vehicle at a second point, and said lever being pivotally mounted about a fourth axis (112) on said leg (102).

a control jack (125) for applying at least one rotary couple to said brace (108) and to said leg (102),

first link means linking one end of said jack (125) to the leg (102) at a third point, and second link means (166, 160) linking the other end of said jack to said brace at a fourth point (143), said third and fourth points (12, 143) being situated substantially in the neigbourhoods of said first and second points respectively,

positioning means for positioning said rod and said lever relative to each other (140, 141, 156),

characterised in that said positioning means are constituted by an arm (141) of given length, comprising two links (144, 145) each having one end rotatable about a common sixth axis (146), said arm (141) being linked substantially at its ends to the fourth point (143) on said rod (109) and to a sixth point (142) on said lever (111), said fourth and sixth points (143, 142) and said third axis (113) being situated at the vertices of a deformable triangle, the jack (125) being arranged so as to apply a rotary couple to said brace (108) via one of said links (144, 145) to which it likewise applies a rotary couple.

2. Running gear according to claim 1, characterized by the fact that it includes a spring (156) having its ends anchored to two fixing points (157, 159) on respective ones of said links (144, 145), said fixing points (157, 159) and said sixth axis (146) being situated at the vertices of a deformable triangle.

3. Running gear according to claim 1 or 2, characterised by the fact that said arm (141) includes means (160, 166) for supporting the end of said jack (125).

4. Running gear according to claim 3, characterised by the fact that said jack includes internal stops (153, 154) for limiting the length of its travel.

## Patentansprüche

1. Fahrwerk für ein Fahrzeug, insbesondere ein Flugzeug, umfassend

— ein Bein (102), das mindestens ein Rad trägt, wobei dieses Bein (102) eine erste Drehachse (126) aufweist, die an dem Fahrzeug in einem ersten Punkt befestigbar ist,

— eine Verstrebung (108), die eine Pleuelstange (109) und einen Hebel (111) umfaßt, die gegeneinander um eine dritte Achse (113) verschwenkbar montiert sind, wobei die Pleuelstange (109) eine zweite Drehachse (110) aufweist, die an dem Fahrzeug in einem zweiten Punkt befestigbar ist, während der Hebel (111) um eine vierte Achse (112) gegenüber dem Bein (102) schwenkbar montiert ist,

— einen Steuerzylinder (125) zum Beaufschlagen der Verstrebung (108) und des Beins (102) mit wenigstens einem Drehmoment,

— erste Mittel zum Verbinden von einem Ende des Zylinders (125) mit dem Bein (102) in einem dritten Punkt und zweite Mittel (166, 160) zum Verbinden des anderen Endes des Zylinders mit der Verstrebung in einem vierten Punkt (143), wobei der dritte (12) und der vierte (143) Punkt im wesentlichen benachbart zu dem ersten bzw. zweiten Punkt angeordnet sind,

— Mittel zum Positionieren der Pleuelstange und des Hebels in Bezug zueinander (140, 141, 156),

dadurch gekennzeichnet, daß die Mittel zum Positionieren durch einen Arm (141) vorgegebener Länge, der aus zwei Schwingen (144, 145) gebildet wird, die an einem ihrer Enden um eine sechste Achse (146) drehbar sind, wobei der Arm (141) im wesentlichen mit seinen beiden Enden in einem vierten Punkt (143) an der Pleuelstange (109) und in einem sechsten Punkt (142) an dem Hebel (111) angelenkt ist, wobei der vierte und der sechste Punkt (143, 142) und die dritte Achse (113) an den Ecken eines verformbaren Dreiecks angeordnet sind, gebildet werden, während der Zylinder (125) derart angeordnet ist, daß ein Drehmoment auf die Verstrebung (108) unter Zwischenschaltung einer der beiden Schwingen (144, 145) ausgeübt wird, auf die auch ein Drehmoment ausgeübt wird.

2. Fahrwerk nach Anspruch 1, dadurch gekennzeichnet, daß es eine Feder (156) umfaßt, deren Enden in zwei entsprechenden Halterungen (157, 159) an den beiden Schwingen (144, 145) verankert sind, wobei die beiden Halterungen (157, 159) und die sechste Achse (146) an den Ecken eines verformbaren Dreiecks angeordnet sind.

3. Fahrwerk nach einem der Ansprüche 1 oder 2, dadurch gekennzeichnet, daß der Arm (141) Mittel (160, 166) zum Halten des Endes des Zylinders (125) aufweist.

4. Fahrwerk nach Anspruch 3, dadurch gekennzeichnet, daß der Zylinder Anschläge (153, 154) im Inneren zum Begrenzen seiner Hublänge aufweist.

7

FIG. 1

FIG. 2

FIG.3